# EUROPEAN PATENT APPLICATION

(11) **EP 2 270 537 A1**
(43) Date of publication of application: **05.01.2011**
(21) Application number: 10166027.2
(22) Date of filing: 15.06.2010
(51) Int. Cl.: G01S 5/06, G01S 5/12

(54) **Method and apparatus for the passive location of radio signal transmitters**

(30) Priority: 19.06.2009 IT RM20090317
(71) Applicant: Elettronica S.p.A., 00131 Roma RM (IT)
(72) Inventor: Rossi, Vittorio, 00131 Rome (IT); Benvenuti, Dario, 00131 ROME (IT)
(74) Representative: Raimondi, Adriana

(57) **Abstract**

Method and apparatus for locating sources (P1,P2) emitting radio signals comprising a plurality of passive antennae (R11,R12,R21,R22,R30) arranged at different locations (S1,S2,S3), having
- at least two pairs (R10,R20) of receiving antennae which are positioned in at least two different locations (S1,S2) situated ata suitable distance (D1) from each other;
- at least one additional receiving antenna (R30) arranged at a third location (S3) situated at a suitable distance (D2,D3) from each one of the two said first locations (S1,S2);
- devices for digitally processing the signals, mounted on each of said antennae and able to generate, for each signal received, a digital report containing at least the time of arrival (TOA) of the signal at the respective antenna;
- a synchronization sysem able to supply a synchrnoizing signal to all the antennae;
- a centralized date procesisng unit (E) able to process the information contained in the said reports received from the respective antennae;
- a communications system which connects each antenna to the processing unit for tranmission of the respective reports.

## Description

The present invention relates to a method and an apparatus for the passive location of communication and/or radar radiofrequency signal transmitters.

It is known, in the sector relating to the surveillance of territory and border regions, in particular, but not exclusively in maritime areas, that radar networks (active by definition) provided for such detection activity, may be effectively assisted by purely passive systems consisting of a certain number of radiofrequency signal receivers which are distributed over the territory to be monitored or along the coast in the case of surveillance of maritime areas.

These passive systems, which are based on the analysis of the RF signals received, are able to help locate the position of an emitting source present in the area being monitored and offer a number of major advantages compared to radar networks:
- lower cost;
- greater range than radars owing to the fact that the working signal is that directly transmitted by the source which is to be identified and not that emitted by the radar and reflected by the object to be identified, as instead occurs in the case of location by means of radar; this means that the path of the signal which must be identified is halved and therefore the working range is greater;
- possibility of not being in turn intercepted, without emitting any signal;
- possibility of recognizing the presence of several transmitters situated very close to each other.

An application for which these passive receiver networks may be very useful is that of controlling the illegal trafficking which takes place along the coast, such as contraband activities, which are generally carried out with the aid of small vessels which are not easily identifiable by the coastal radar systems.

It is also known that these passive systems use different location techniques, each of which is effective for certain situations and for certain types of RF transmitters, while being less effective, or even not utilizable, in different contexts.

In particular, there exist two main techniques for carrying out the passive location of an emitting source by means of a network of passive receivers:
- "multilateration", which makes use of the time difference of arrival (TDOA) of an RF signal at the different receivers which make up the system,
- "triangulation", which uses the direction, or the angle of arrival (AOA) along which each signal is received by each receiver.

The first of these techniques (multilateration) requires a plurality (at least three) receiving antennae which are arranged at a distance from each other of the order of km in the area which is to be monitored or along the sea-coast.

As mentioned, the technique uses the measurement of the time differences of arrival (TDOA) with which the signals are received by the various receivers which make up the network. In particular, for each pair of receivers the corresponding TDOA may be measured and, on the basis of this value and their respective position, it is possible to define a curve (hyperbola), i.e.the locus of the points where the transmitter of the signal received must be located. If at least two pairs of receivers acquire the signal, then the point of intersection of the two respective curves defines uniquely the position of the source of the said signals.

In order to be able to perform a congruent measurement of the time differences of arrival (TDOA) of the signals, the network of sensors must have a common time base, and consequently all the receivers must be synchronized by means of a known synchronization system. In addition, in order to be able to calculate correctly the TDOA, all the receivers which are involved in calculation of the position must be able to receive the same signal emitted by the transmitter; this imposes limitations on the type of sources to which this method may be applied, this method not being effective in the case of a signal emitted by very directional sources, for example a radar with narrow lobes, the signal of which may be received only by one or two receiving antennae.

The second of the techniques mentioned (triangulation) uses the measurement of the direction (angle of arrival: AOA) from where the signals are received by the various receivers which make up the network. This technique requires that the receivers be able to determine the direction of origin of the signals using one of the various known techniques: for example rotating antennae, which are able to recognize the direction in which the strength of the signal is greatest: or systems composed of several antennae which determine the direction of the source by means of a comparison of the difference in phase, amplitude or time of arrival of the signal received.

The position of the RF source is determined by the point of intersection of the direction identified by each receiver. Therefore, in this case there is no need either for synchronization or for simultaneity in the measurement of the AOA; the receivers, however, must be equipped with a goniometer in order to be able to measure the direction of origin of the signal. In general, measurements by means of triangulation are less accurate than multilateration measurements, both because there may be a not negligible imprecision of the angle (a few degrees) and because the precision is less the more the directions defined by two antennae tend to be parallel (for example, if the transmitter is situated along the line joining together the two antennae).

These known techniques, therefore, are subject to major drawbacks in that the systems based on multilateration are unable to define sources of directional signals, such as a radar with an antenna beam of 2 degrees and lobes at -30dB, and the systems based on triangulation are not very precise owing the lack of precision in definition of the position of the signal sources.

For these reasons mixed techniques, which use both the multilateration technique with measurement of the TDOA and the triangulation technique with measurement of the AOA, have also been developed. However, these systems have the downside of a high cost and high level of complexity since they involve the simultaneous application of both technologies which each require their own specific equipment.

The technical problem which is posed, therefore, is to provide an apparatus for passive location of sources emitting RF signals, which does not have the drawbacks of the known solutions and which is able to identify the position of transmitters of signals of different types (communication or radar signals) using a single technology, so as to be simpler from a constructional point of view and be able to be produced in a cost-effective manner.

In connection with this problem it is also required that this apparatus should be very robust and be able to be easily installed also in locations which are difficult to access and are exposed to adverse weather conditions.

These results are achieved according to the present invention by a method according to Claim 1 and an apparatus according to Claim 11.

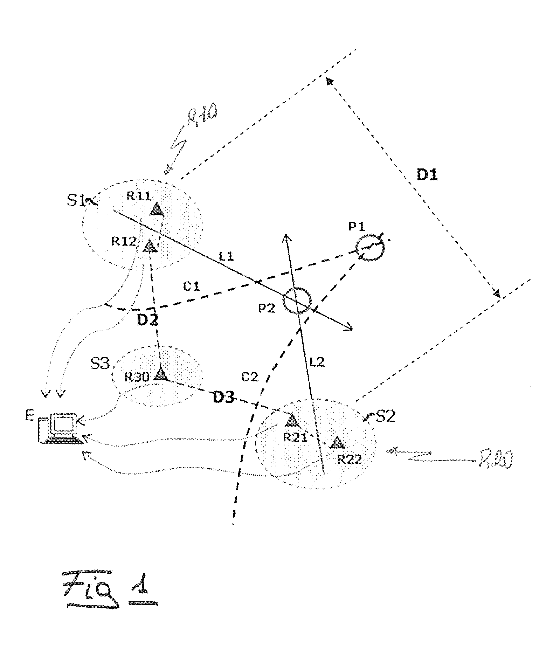

Further details may be obtained from the following description of a non-limiting example of embodiment of a method and an apparatus according to the present invention provided with reference to the sole Figure 1 in which:
Figure 1 is a structural diagram illustrating operation of an apparatus according to the present invention.

As shown in Figure 1, which shows the minimum constructional configuration thereof, an apparatus according to the present invention comprises:
a) at least two pairs, R10, R20, of receiving antennae, R11,R12 and R21,R22, respectively, which are positioned in different locations S1,S2 situated at a distance D1 from each other of between 10 and 50 km; the distance between the two antennae R11,R12 and R21,R22 of each pair of each location being of the order of 100 to 1000 m;
b) at least one additional receiving antenna R30 arranged in a third location S3 situated at a respective distance D2,D3 of the order of tens of km, like D1, from the said two pairs (R10,R20) of antennae.
   Each one of the said antennae of the apparatus is equipped with devices for digital processing of the signals, able to generate, for each signal received, a digital report (PDM = Pulse Descriptor Message) containing information relating to: the time of arrival (TOA) of the signal and other characteristic information about the signal itself such as, for example, its frequency (RF), pulse width (PW), amplitude (A), type of modulation of pulse (MOP), etc., which allow its unique identification from among the signals emitted by other transmitters which are situated in the coverage zone;
   in addition, each of the said antennae is also able to generate a short report on the individual transmitters (Track File), associating the PDMs recorded; each "track file" contains the same information as the PDMs, with the mean, maximum and minimum values and percentage variations and, in addition, as a result of processing of sequences of PDMs, also the repetition period and type of the pulses (PRI), and the antenna scanning period and type;
c) a synchronization system, conventional per se, which supplies a synchronization signal to all the antennae (at least 5) and ensures that their respective clocks remain synchronized with each other;
d) a data processing centre, E, which processes the information received from each receiving antenna;
e) a communications system which connects each antenna (R11,R12,R21,R22,R30) to the processing centre (E) for transmission of the data collected by said antennae to said centre. This communication system may be per se conventional (for example a radio, fibre or twisted pair system) and therefore will not be described in detail.

With this configuration the operating principle of said apparatus is as follows:
a) each of the at least five receiving antennae:
   - acquires the synchronization signal in order to establish a uniform base for the reception/calculation times;
   - acquires the RF signals emitted by the emitting sources which are located in the radio coverage zone of the apparatus;
   - stores said signals and generates a digital report (PDM: Pulse Descriptor Message) for each pulse received, containing the TOA and the characteristic data of the signal, for each one of them;
   - generates a short report (track file) for each transmitter, containing the mean frequency and variations, the mean pulse width and variations, the maximum amplitude and variations, the antenna scanning measurement and type, the repetition period and type of pulses, the pulse modulation type, etc.;
   - sends periodically (at intervals of the order of one second) the track report to the processing centre;
b) the processing centre performs fusion of the data, generating a global track report, with the parameters measured and their variations, which is constantly updated by the reports from each antenna. Each global track file also contains the information as to which antenna generated an update, the type of update and the update time (historical file).
c) the processing centre requests periodically (at time intervals of about a few tens of seconds) the appropriate location function for each transmitter, the position of which is to be identified, sending a suitable command to the antennae concerned;
d) upon receipt of the command, the antennae collect the signals from the given transmitter for a predetermined observation period; all the PDM for the selected transmitter generated by the receiving antennae during this observation interval are sent to the processing centre (E) for processing of the information received;
e) the processing centre, on the basis of the update times, the progression of the track file amplitude and the scanning type and values, is able to determine the coverage situation of each transmitter on the various antennae, selecting for each transmitter the most appropriate moment, the necessary duration for collection of the location pulses, and the technique (multilateration or triangulation) to be used.

The following situations may therefore exist with regard to the visibility of the emitting sources to be identified in relation to the various passive detection antennae:
I. transmitters always visible on all the antennae: the correct technique is multilateration, the collection instant is unimportant and the duration must be such that a certain number of pulses (≅100) are received;
II. transmitters updated on different antennae at different times (slow scanning): the correct technique is triangulation, the processing centre must perform the collection of pulses from a first group of antennae which are visible and calculate the AOA by means of the TDOA; then it must perform the subsequent collection on a second group of antennae and calculate the second AOA; the angles are stored in the track reports and, when both are present, the location is calculated;
III. fast scanning transmitters, which are therefore always updated, but potentially with different pulses from one antenna to another; in this case a single collection operation is performed for all the antennae and the processing centre must check whether these is a certain minimum number of pulses received "simultaneously" by at least three of said locations (S1,S2,S3), namely whether the time difference between one reception and another is smaller than the preedefined maximum time interval Δt_{MAX}=Dx/c depending on the relative distance between the various antennae (Dx); if this condition exists, calculation by means of multilateration is performed, otherwise the pairs of antennae with "simultaneous" pulses are identified and the calculation of the two AOA and subsequent triangulation performed.

It is pointed out that normally the first condition is fulfilled by signals emitted by non-directional radiotransmitters which are generally used for radio communications and that, in this case, all the antennae of the apparatus receive the same signal, albeit at slightly different times, owing to the different distances between the source and each of the receivers.

The second and third conditions are fulfilled by signals which are very directional such as, for example, those emitted by certain types of radar, the beam of which is contained within a very small angle, of about 2 degrees, and with secondary lobes at -30dB and therefore able to illuminate only one or two locations simultaneously.

This type of signal is generally able to illuminate in a given instant only the antennae which are situated in one location; then, by rotating the direction of the beam, the radar will illuminate subsequently also the other locations.

If the first condition is fulfilled and if, for example, the radio signal is received from a non-directional transmitter, the processor selects the mode of multilateration for calculation of the transmitter position.

In this case, on the basis of the information regarding the time of arrival TOA, associated with each report, the processing centre calculates at least two TDOA values associated with, at least, two pairs of receiving antennae, each formed by antennae positioned in two different locations: for example R12,R30 at S1,S3 and R21,R30 at S2,S3. On the basis of the said TDOA values, the - at least two - curves C1,C2, representing the loci of the points where the source emitting the signal analyzed is located, are calculated. The intersection point P1 of the said curves C1,C2 defines in a unique manner the position where the signal transmitter is located.

In the case of the second or third condition the processor selects the triangulation mode for calculation of the transmitter position. In this case, the TDOA for several antennae situated in pairs within the same location, for example the TDOA for the pair of receivers R11,R12 at S1 and the TDOA for the pair of receivers R21,R22 at S2, is calculated.

For each of said pairs of antennae it is therefore possible, by applying known algorithms to define the (straight) lines which represent the loci of the points where the emitting source must be located. By selecting the - at least two - lines corresponding to similar signals, i.e. signals which are regarded as emitted by the same source, it is possible to identify in a unique manner the position of the transmitter as the point of intersection of said at least two lines.

For example, the point P2, which is the intersection of the line L1, defined by the pair R11,R12, and the line L2, which is defined by the pair R21,R22, defines in a unique manner the position P2 in which the transmitter of the signal received by the two pair of antennae is located.

It can therefore be seen how both the calculation techniques, which are used to determine the position of one or more radio signal emitting sources, use the same TDOA information whatever the signal type, e.g. communication or radar signal, signal of a directional or non-directional nature, emitted by the source.

On the basis of the TDOA information, together with the analysis of the signal reports acquired from each antennae, which allow identification of the type of signal, the antennae from which it is received, the quality of the signal and therefore any similarity between different signals, the central processor is able to choose automatically the calculation technique to be used to allow more precise location of each transmitter.

On the basis of the apparatus described it is also possible to define a method for locating sources emitting radio signals by means of a plurality of passive antennae arranged in different locations, comprising the following steps:
- arranging at least one first pair (R10) and at least one second pair (R20) of receiving antennae (R11,R12;R21,R22) in associated locations (S1,S2) situated at a suitable distance from each other;
- arranging at least one additional receiving antenna (R30) at a third location (S3) situated at a suitable relative distance from each one of the two said said first location (S1) and second location (S2);
- synchronizing all the receiving antennae;
- acquiring, by means of at least three antennae, each of which is arranged at a different location (S1,S2,S3), or at least two pairs of antennae (R10,R20), each pair being arranged at a different location (S1,S2) radio signals emitted by at least one emitting source;
- digitally processing, by means of each antenna, the signal received with generation and storage of a report (PDM) containing the associated time of arrival (TOA) and other characteristic information about the signal itself;
- generation of a short report (track file) by each antenna, containing the mean values and the variations of each PDM for each transmitter;
- sending, by means of each antenna, the track file to a central processing unit (E);
- processing by means of said central unit (E) of a global track file updated by all the track files of the antennae; this historical report allows the choice of the most suitable location technique from multilateration and triangulation, by means of analysis of the amplitudes of the signals received from the various antennae (scanning) and the progression of the updates (coverage);
- selection, by means of the central processing unit (E), of one transmitter at a time and choice of the mode of data collection and location technique;
- sending to the antennae concerned, by means of the central processing unit (E), commands for collecting data relating to the transmitter selected;
- data collection and storage of a PDM file for each antenna and sending to the central processing unit (E);
- processing, by means of said central unit (E), the signals received with calculation of the TDOA for each signal received, from the minimum number of pairs of antennae needed to allow application of the different procedures;
- application of the selected procedure and identification of the coordinates of the transmitting antenna.

According to preferred embodiments, it is envisaged that:
- the distance between each antenna (R10,R11;R21,R22) of each pair (R10,R20) of the same location ranges between 100 m and 1000 m;
- the distance between antennae situated at different locations ranges between 10 km and 50 km.
- said characteristic parameters for uniquely identifying signals emitted by the same source consist of the following:
   - Frequency: type, value, ranges
   - PRI: type, value, ranges
   - PW: type, value, ranges
   - Amplitude: Maximum, mean
   - Modulation: phase, frequency, amplitude
- the at least two procedures stored in the central processor are of the multilateration and triangulation type.
- the selection of one or other of said two procedures is performed on the basis of the number of antennae which have received the same signal, the identification of the locations where said antennae have received the signal, the recognition of signals generated by the same transmitter and the TDOA values calculated.
- the procedure selected consists in multilateration if at least three antennae R11,R21,R30 at three different locations S1,S2,S3 have received the same signal within a predefined maximum time interval Δt_{MAX} related to the relative distance between the antennae considered;
- otherwise the procedure selected consists in triangulation if at least two pairs of antennae (R10,R20) in at least two different locations (S1,S2) have received signals emitted by the same source.
- the procedure for defining the position of the emitting source is performed by means of a combination of multilateration and triangulation; in this case the position P in which the transmitter is situated may be located as the point of intersection of at least one curve of the type C (hyperbola) typical of multilateration and defined by at least two antennae situated in different locations, and at least one line of the type L, typical of triangulation, defined by a pair of antennae situated in the same location, enabling the problem to be resolved also in the case of signals which illuminate only one pair of antennae in one location and one antenna in another location.

It is therefore clear how, as a result of the apparatus and method according to the invention, it is possible to detect the position of transmitters which transmit radio communication signals or generate radar signals, both of the non-directional type and of the highly directional type, in a purely passive mode and based on a single of type of detection parameter, the TDOA, i.e. using a single technology for the receiving apparatus.

The receiving apparatus must be arranged in at least three locations, at least two of which are provided with at least one pair of receivers each, and a third location with at least one receiver, for a total of at least five receivers, all synchronized with each other on the same time bases and all connected to a central processing unit.

It is also pointed out that, although described in relation a minimum configuration, it is within the competence of the person skilled in the art to apply the apparatus which implements the method according to the present invention also to the case where the area to be monitored is such that it requires the presence of a number of locations greater than three and/or the arrangement of a greater number of antennae for each location in order to cover more effectively all the points within the area to be monitored.

Although described in connection with an example of embodiment of the invention, it is understood that the scope of protection of the present patent is defined solely by the following claims.

## Claims

1. Method for locating sources (P1,P2) emitting radio signals by means of a plurality of passive antennae arranged in at least three different locations, **characterized in that** it comprises the following steps:
- arranging at least one first pair (R10) and at least one second pair (R 20) of receiving antennae (R11,R12;R21,R22) at an associated first location (S1) and second location (S2) which are at a suitable distance from each other;
- arranging at least one additional receiving antenna (R30) at a third location (S3) situated at a suitable relative distance from each one of the two said first location (S1) and second location (S2);
- synchronizing all the receiving antennae;
- acquiring, by means of at least three antennae, each of which is arranged at a different location (S1,S2,S3), and/or at least two pairs (R10,R20) of antennae, each pair being arranged at a different location (S1,S2), radio signals emitted by at least one emitting source;
- digitally processing, by means of each antenna, the signal received and generating a short report (Track File) containing at least the TOA and the characteristic parameters of each transmission;
- sending, by means of each antenna, the track report containing the information previously stored to a central processing unit (E);
- processing, by means of said central unit (E), the track reports received so as to form a global (Data Fusion) track file.
- sending to the antennae concerned by means of the central processing unit (E), a suitable command for collecting data relating to a specific emitting source;
- digitally processing, by means of each antenna, the signal received from the specific source selected by the processor and generating and storing a pulse report (PDM) containing the associated time of arrival (TOA) and other characteristic information about the signal itself;
- sending the pulse reports (PDM) recorded by each antenna to the central processing unit (E);
- calculating, by means of the central unit, the TDOA for each signal received by each pair of antennae;
- selecting and applying the procedure for identifying the coordinates of the transmitting antenna.

2. Method according to Claim 1, **characterized in that** the distance between each antenna (R10,R11;R21,R22) of each pair (R10,R20) at the same location ranges between 100 m and 1000 m.

3. Method according to Claim 1, **characterized in that** the distance between each pair of antennae at different locations ranges between 10 km and 50 km.

4. Method according to Claim 1, **characterized in that** said characteristic parameters for uniquely identifying signals emitted by the same source consist of the following:
• Frequency: type, value, ranges
• PRI: type, value, ranges
• PW: type, value, ranges
• Amplitude: Maximum, mean
• Modulation: phase, frequency, amplitude

5. Method according to Claim 1, **characterized in that** the at least two procedures stored in the central processor are of the multilateration and triangulation type.

6. Method according to Claim 5, **characterized in that** the selection of one or other of said two procedures is performed on the basis of the number of antennae which have received the same signal, the identification of the locations where said antennae which have received the signal are situated, the recognition of signals generated by the same transmitter and the TDOA values calculated.

7. Method according to Claim 6, **characterized in that** the procedure selected consists in multilateration if at least three antennae at three different locations (S1,S2,S3) have received the same signal within a predefined time interval.

8. Method according to Claim 7, **characterized in that** the said time interval is related to the relative distance between the receiving antennae.

9. Method according to Claim 6, **characterized in that** the procedure selected consists in triangulation if at least two pairs (R10,R20) of antennae in at least two different locations (S1,S2) have received signals emitted by the same source.

10. Method according to Claim 1, **characterized in that** the procedure for defining the position of the emitting source is performed by means of a combination of multilateration and triangulation.

11. Apparatus for locating sources (P1,P2) emitting radio signals according to the method of Claim 1 and comprising a plurality of passive antennae arranged at different locations (S1,S2,S3), **characterized in that** it comprises:
- at least two pairs (R10,R20) of receiving antennae which are positioned in at least two different locations (S1,S2) situated at a suitable distance (D1) from each other;
- at least one additional receiving antenna (R30) arranged at a third location (S3) situated at a suitable distance (D2,D3) from each one of the two said locations (S1,S2);
- devices for digitally processing the signals, mounted on each of said antennae and able to generate, for each signal received, a digital report containing at least the time of arrival (TOA) of the signal at the respective antenna;
- a synchronization system able to supply a synchronizing signal to all the antennae;
- a centralized data processing unit (E) able to process the information contained in the said reports received from the respective antennae;
- a communications system which connects each antenna (R11,R12,R21,R22,R30) to the processing unit (E) for transmission of the respective reports;

12. Apparatus according to Claim 11, **characterized in that that** the relative distance between the locations is of the order of 10 to 50 km.

13. Apparatus according to Claim 11, **characterized in that** the relative distance between two antennae (R11,R12;R21;R22) of each pair at each location (S1,S2) is of the order of 100 to 1000 m.

14. Apparatus according to Claim 11, **characterized in that** said characteristic auxiliary information of a signal consists of the following:
• Frequency: type, value, ranges
• PRI: type, value, ranges
• PW: type, value, ranges
• Amplitude: Maximum, mean
• Modulation: phase, frequency, amplitude
